# EUROPEAN PATENT SPECIFICATION

(11) **EP 1 367 237 B1**
(45) Date of publication and mention of the grant of the patent: **13.07.2005**
(21) Application number: 03011630.5
(22) Date of filing: 22.05.2003
(51) Int. Cl.: F02B 37/10, F02D 23/00, F02D 41/02, B60K 28/16

(54) **Vehicular control apparatus and vehicular control method**
Vorrichtung und Verfahren zur Steuerung von Kraftfahrzeugen
Dispositif et méthode de contrôle de véhicules

(30) Priority: 29.05.2002 JP 2002156312
(43) Date of publication of application: 03.12.2003
(73) Proprietor: Toyota Jidosha Kabushiki Kaisha, Toyota-shi, Aichi-ken 471-8571 (JP)
(72) Inventor: Hashimoto, Hiromasa, c/o Toyota Jidosha K. K., Toyota-shi, Aichi-ken, 471-8571 (JP); Akita, Koichi, c/o Toyota Jidosha Kabushiki Kaisha, Toyota-shi, Aichi-ken, 471-8571 (JP); Igarashi, Osamu, c/o Toyota Jidosha Kabushiki K., Toyota-shi, Aichi-ken, 471-8571 (JP); Masuda, Kei, c/o Toyota Jidosha Kabushiki Kaisha, Toyota-shi, Aichi-ken, 471-8571 (JP); Kanba, Chika, c/o Toyota Jidosha Kabushiki Kaisha, Toyota-shi, Aichi-ken, 471-8571 (JP)
(74) Representative: Winter, Brandl, Fürniss, Hübner, Röss, Kaiser, Polte Partnerschaft Patent- und Rechtsanwaltskanzlei

(56) References cited:
- EP-A- 0 354 054
- PATENT ABSTRACTS OF JAPAN vol. 017, no. 701 (M-1533), 21 December 1993 (1993-12-21) & JP 05 240058 A (TOYOTA MOTOR CORP), 17 September 1993 (1993-09-17)

## Description

### BACKGROUND OF THE INVENTION

### 1. Field of the Invention

The invention relates to a vehicular control apparatus and vehicular control method in accordance with the preambles of claims 1 and 3, and claims 6 and 8, respectively.

### 2. Description of the Related Art

In recent years, controls such as a traction control and vehicle behavior stabilization controls including a yaw control and the like have been put into practice. The vehicle behavior stabilization controls are adapted to limit the output from an internal combustion engine (hereinafter also referred to simply as an "engine") or to brake wheels on the basis of detected operational states of the vehicle (wheel speeds, deceleration, yaw rate, the rate of change in yaw rate, and the like) so as to stabilize the behavior of the vehicle. The traction control is adapted to ensure optimal traction by suppressing the idle running of wheels. In limiting the output from the engine, intake air amount is often adjusted by controlling the opening of a throttle valve.

An attempt to achieve high outputs (or low fuel consumption) by supercharging intake air of the engine by means of a turbocharger has also been utilized for a long time. However, the turbocharger has some disadvantages that require improving. One of them is that rising characteristics in supercharging pressure are inappropriate at low speeds and that output characteristics are not good at low speeds. This is a phenomenon that occurs at low speeds with a small amount of exhaust gas energy due to the principle of the turbocharger that intake air is supercharged utilizing exhaust gas energy. To improve this inconvenience, while adoption of a twin-turbo construction is generally accepted, an attempt to obtain a desired supercharging pressure by incorporating a motor into a turbine/compressor and forcibly driving the turbine/compressor has also been made. In such cases, it is also possible to cause the motor to perform regenerative power generation utilizing exhaust gas energy. A motorized turbocharger as described above is disclosed, for example, in Japanese Patent Application Laid-Open No. 5-240058.

As described above, the control of limiting the output from the engine (the output reduction control) may be performed during the vehicle behavior stabilization controls or the traction control. Although the output reduction control and the motor supercharging control are contrary to each other, no sufficient studies have been conducted on the cooperation between these controls.
EP 0 354 054 A2 discloses a vehicular control apparatus which starts supercharging control by means of a motor when an output reduction control of an internal combustion engine, more specifically an engine braking, is started and the energy of exhaust gases from the engine is small.

### SUMMARY OF THE INVENTION

It is an object of the invention to provide a vehicular control apparatus and a vehicular control method capable of ensuring cooperation between an output reduction control based on the operational state of a vehicle and a motor supercharging control in a motorized turbocharger.
This object is solved by an apparatus and method in accordance with claims 1 and 3, and claims 5 and 7, respectively.

According to the vehicular control apparatus and the vehicular control method of claims 1 and 6 respectively, the supercharging control by the motor is continued even when the output reduction control of the internal combustion engine is started, and is stopped if the output reduction control of the internal combustion engine continues for a predetermined period or more.

As described above, if the output reduction control continues for the predetermined period or more, it is improbable that the current situation will require supercharging immediately. The motor is stopped because of a determination that the current situation is more favorable to stoppage of the supercharging control that is contrary to the output reduction control Thus, it is possible to prevent the output reduction control and the motor supercharging control from conflicting with each other while suppressing a deterioration in turbo responsive characteristics resulting from the output reduction control that is performed for a considerably short period.

According to the vehicular control apparatus and the vehicular control method of claims 3 and 8, respectively, it is forecast whether or not the output reduction control of the internal combustion engine by the output reduction means will continue for a predetermined period or more and wherein the supercharging control performed by means of the motor is stopped even at the beginning of the output reduction control of the internal combustion engine if it is forecast that the output reduction control will continue for the predetermined period or more.

As described above, if it is forecast that the output reduction control will continue for the predetermined period or more, it is improbable that supercharging will be required immediately after the start of the output reduction control. Conversely, it is possible to determine that the current situation is more favorable to stoppage of the supercharging control that is contrary to the output reduction control. In this case, the motor is stopped as soon as the output reduction control is started. By adopting this construction as well, it becomes possible to prevent the output reduction control and the motor supercharging control from conflicting with each other while suppressing a deterioration in turbo responsive characteristics resulting from the output reduction control that is performed for the considerably short period.

Also, according to a preferred embodiment of the vehicular control apparatus and vehicular control method in accordance with the invention it is determined whether or not a driving road surface is low in friction coefficient and it is forecast that the output reduction control of the internal combustion engine will continue for a predetermined period or more if it is determined that the driving road surface is low in friction coefficient.

According to the preferred embodiment as mentioned above, it is determined whether or not the driving road surface is low in friction coefficient, and it is forecast that the output reduction control of the internal combustion engine will continue for the predetermined period or more if it is determined that the driving road surface is low in friction coefficient. If the output reduction control is started on the ground that the driving road surface is low in friction coefficient, it is possible to determine that the urgent necessity of supercharging is improbable. Therefore, if it is thus determined whether or not the driving road surface is low in friction coefficient, it is possible to easily determine whether or not the output reduction control will continue for the predetermined period or more.

### BRIEF DESCRIPTION OF THE DRAWINGS

The above and other objects, features, advantages, technical and industrial significances of this invention will be better understood by reading the following detailed description of a preferred embodiment of the invention, when considered in connection with the accompanying drawings, in which:

Fig. 1 is a block diagram showing the construction of an engine having a vehicular control apparatus in accordance with one embodiment of the invention; and

Fig. 2 is a flowchart of a motor supercharging control performed by the control apparatus in accordance with the embodiment of the invention.

### DETAILED DESCRIPTION OF PREFERRED EMBODIMENT

In the following description and the accompanying drawings, the invention will be described in more detail in terms of an exemplary embodiment.

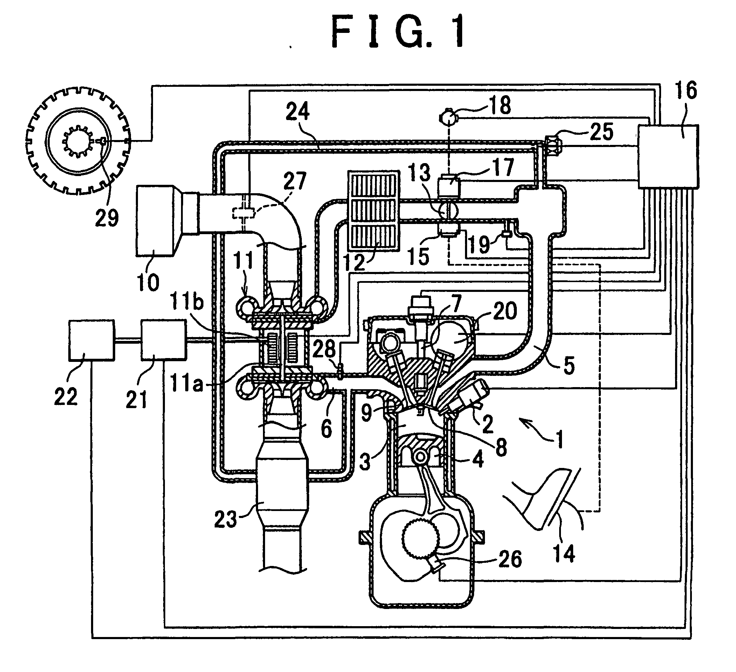

A vehicular control apparatus of an internal combustion engine (hereinafter referred to as the "engine") in accordance with one embodiment of the invention will be described hereinafter. Fig. 1 illustrates an engine 1 having the vehicular control apparatus of this embodiment.

Although the engine 1 described in this embodiment is a multi-cylinder engine having a plurality of cylinders, only one of them is illustrated in Fig. 1 as a cross-sectional view. The engine 1 is adapted such that fuel is injected by an injector 2 onto an upper face of a piston 4 accommodated in a cylinder 3. This engine 1 is a so-called lean-burn engine that allows stratified combustion. The engine 1 realizes a lean-burn state by supercharging an additional amount of intake air by means of a turbocharger that will be described later, thus making it possible to accomplish a reduction in the amount of fuel consumption as well as an enhancement of output.

The engine 1 compresses air that has been sucked into the cylinder 3 through an intake passage 5 by means of the piston 4, and fuel is injected into a dent formed in the upper face of the piston 4, so that a rich mixture gathers in the vicinity of an ignition plug 7. If this mixture is ignited by the ignition plug 7 and burnt, a space between the inside of the cylinder 3 and the intake passage 5 is opened and closed by an intake valve 8. Exhaust gas produced after combustion is discharged to an exhaust passage 6. A space between the inside of the cylinder 3 and the exhaust passage 6 is opened and closed by an exhaust valve 9. In a direction from the upstream side to the downstream side, an air cleaner 10, an airflow sensor 27, a turbo unit 11, an intercooler 12, a throttle valve 13, and the like are disposed along the intake passage 5.

The air cleaner 10 removes dirt, dust, and the like contained in intake air. The airflow sensor 27 of this embodiment is of hot-wire type and detects intake air amount as mass flow. The turbo unit 11 is disposed between the intake passage 5 and the exhaust passage 6 and performs supercharging. In the turbo unit 11 of this embodiment, a turbine-side impeller and a compressor-side impeller are coupled by a rotational shaft (this portion will be hereinafter referred to simply as a "turbine/compressor 11a").

Further, the turbocharger of this embodiment is a motorized turbocharger into which a motor lib is incorporated such that the rotational shaft of the turbine/compressor 11a serves as an output shaft. Incidentally, the turbo unit 11 can function as a general supercharger that performs supercharging merely by exhaust gas energy, but can also perform additional supercharging by forcibly driving the turbine/compressor 11a by means of the motor 11b.

In addition, it is also possible to perform regenerative power generation by causing the motor 11b to rotate via the turbine/compressor 11a through utilization of exhaust gas energy, and to recover generated power. The motor 11b is mainly composed of a rotor fixed to the rotational shaft of the turbine/compressor 11a and a stator disposed around the rotor. The air-cooled intercooler 12 for cooling intake air whose temperature has risen in response to an increase in pressure resulting from supercharging performed by the turbo unit 11 is disposed on the intake passage 5 at a position downstream of the turbo unit 11. The temperature of intake air is lowered by the intercooler 12, whereby an enhancement in filing efficiency is achieved.

The throttle valve 13 for adjusting intake air amount is disposed downstream of the intercooler 12. The throttle valve 13 of this embodiment is a so-called electronically controlled throttle valve. An operation amount of an accelerator pedal 14 is detected by an accelerator positioning sensor 15. On the basis of this detection result and other information contents, an ECU 16 determines an opening of the throttle valve 13. A throttle motor 17, which serves to open and close the throttle valve 13, is disposed in association therewith. A throttle positioning sensor 18, which detects the opening of the throttle valve 13, is also disposed in association therewith.

A pressure sensor 19 for detecting the pressure in the intake passage 5 (supercharging pressure or intake pressure) is disposed downstream of the throttle valve 13. These sensors 15, 18, 19 and 27 are connected to the ECU 16. Detection results obtained from the sensors are delivered to the ECU 16. The ECU 16 is an electronic control unit composed of a CPU, a ROM, a RAM, and the like. The aforementioned components such as the injector 2, the ignition plug 7, the motor 11b, and the like are connected to the ECU 16 and are controlled by signals delivered therefrom. Furthermore, a variable valve timing mechanism 20 for controlling opening/closing timings of the intake valve 8, a controller 21 connected to the motor 11b, a battery 22, and the like are also connected to the ECU 16.

The controller 21 not only controls the driving of the motor lib but also serves as an inverter that converts the voltage of power regeneratively generated by the motor 11b. After the voltage of power obtained by regenerative generation has been converted by the controller 21, the battery 22 is charged with the power. On the other hand, an air-fuel ratio sensor 28 for detecting exhaust gas air-fuel ratio is disposed in the exhaust passage 6 at a position upstream of the turbo unit 11. The air-fuel ratio sensor 28 is also connected to the ECU 16 mentioned above. A detection result obtained from the air-fuel ratio sensor 28 is delivered to the ECU 16.

In addition, an exhaust gas purification catalyst 23 for purifying exhaust gas is installed downstream of the turbo unit 11. An EGR passage (recirculation passage) 24 for recirculating exhaust gas from the exhaust passage 6 (upstream of the air-fuel ratio sensor 28) to the intake passage 5 (a surge tank portion formed downstream of the pressure sensor 19) is disposed. An EGR valve 25 for adjusting exhaust gas recirculation amount is mounted in the EGR passage 24. An opening control of the EGR valve 25 is also performed by the aforementioned ECU 16. An engine speed sensor 26 for detecting engine speed is installed in the vicinity of a crank shaft of the engine 1. Furthermore, a wheel speed sensor 29 for detecting the speed of each wheel is attached thereto. These sensors 26, 29 are also connected to the ECU 16.

A vehicular control in the engine of the aforementioned embodiment will now be described. Operation state detection means of this embodiment includes the wheel speed sensor 29 and the ECU 16. A wheel state (slip rate) obtained from a detection result of the wheel speed sensor 29 is detected as an operational state. Further, output reduction determination means of this embodiment is a traction control system, and reduces the output from the engine 1 so as to suppress a slip in each wheel. Moreover, output reduction means is composed of the electronically controlled throttle valve 13, the ECU 16, and the like. The output reduction means reduces the output from the engine 1 by limiting intake air amount.

As described above, an output reduction control of the engine 1 by the traction control system is contrary to the motor supercharging control. Therefore, if the motor 11b performs supercharging during operation of the traction control system, it is contemplable to immediately stop the motor 11b from performing supercharging. In this manner, two controls contrary to each other, namely, the output reduction control and the motor supercharging control can be easily prevented from conflicting with each other. However, the output reduction control is instantaneously performed in some cases. Because the motor supercharging control is stopped in such cases, turbo responsive characteristics may deteriorate due to a decrease in rotational speed of the turbine/compressor 11a.

Indeed, since supercharging is performed by the motor 11b for the purpose of eliminating a turbo lag, driving the motor 11b alone makes it possible to suppress the turbo lag in comparison with the non-motorized turbocharger of the related art. However, a comparison made between a case where the motor 11b is continuously driven and a case where the motor 11b is temporarily stopped and then driven again reveals, after all, that the turbo lag is less and turbo responsive characteristics are better in the former case. With a view to preventing a deterioration in turbo responsive characteristics, therefore, the control apparatus of this embodiment continues to drive the motor 11b if the motor 11b is driven at the beginning of a traction control.

However, even in the case where the driving of the motor 11b has continued, if the traction control continues for a predetermined period or more, the driving of the motor 11b is stopped on the ground that the current situation is more favorable to stoppage of the motor supercharging control that is contrary to the output reduction control, because the traction control is not an instantaneous performance. Further, at the beginning of the traction control as well, it is forecast whether or not the traction control to be performed will continue for a predetermined period or more. If it is forecast that the traction control to be performed will continue for the predetermined period or more, the motor lib that is being driven is stopped even at the beginning of the traction control.

Various methods are available to make this forecast. As one of such methods, forecast means of this embodiment adopts a forecast method that will be described hereinafter. In this embodiment, it is determined whether or not a driving road surface is low in friction coefficient. If the driving road surface is low in friction coefficient, it is determined that the traction control is performed for the predetermined period or more instead of being performed instantaneously. In the case where the driving road surface is low in friction coefficient, it can be determined that there is no absolute necessity to avoid a turbo lag through re-acceleration. Therefore, the motor 11b that is being driven is stopped even at the beginning of the traction control.

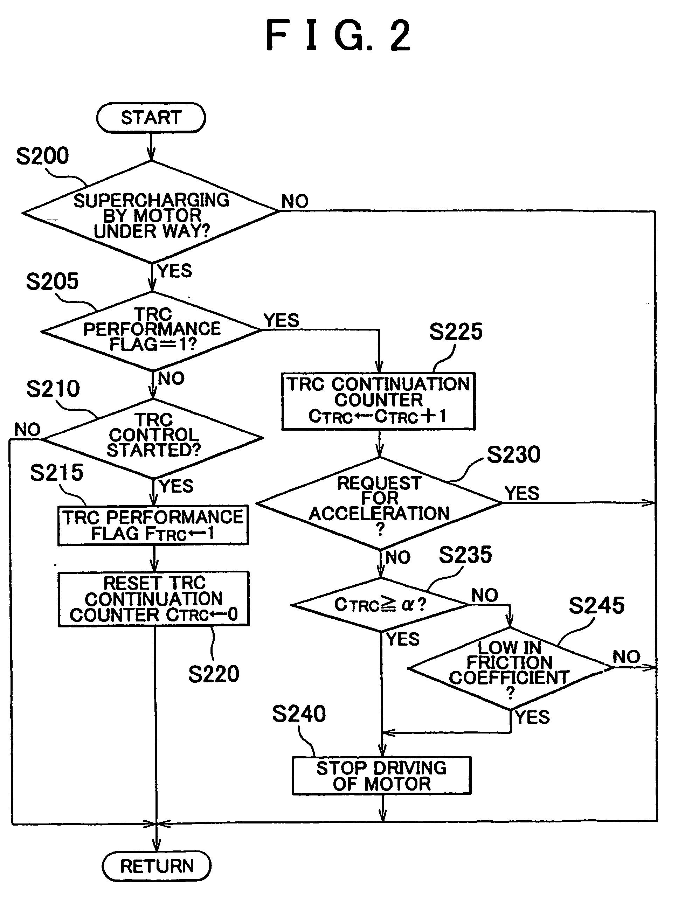

Fig. 2 illustrates a flowchart of the control mentioned above. The following description will be based on the flowchart of Fig. 2. The control according to the flowchart shown in Fig. 2 is repeatedly performed at intervals of a predetermined period.

First of all, it is determined whether or not supercharging performed by the motor 11b (step S200) is in operation. If supercharging performed by the motor 11b is not in operation, there is no need to determine whether or not the driving of motor 11b is to be continued, even in the case where the traction control has been started. Therefore, the control is terminated immediately. If supercharging performed by the motor lib is in operation, it is then determined whether or not a traction control (TRC) performance flag F_{TRC} is 1, namely, whether or not the traction control is already in operation (step S205).

If the result in step S205 is negative, it is determined whether or not there is a request to start the traction control (step S210). The request to start the traction control is generated when the traction control is regarded as necessary as a result of a determination that is made, from a detection result of the wheel speed sensor 29, as to whether or not the performance of the traction control is necessary. More specifically, a request to start the traction control is generated if slip rate [= (wheel speed of driving wheel - vehicle speed)/vehicle speed] exceeds a predetermined value. Thereafter, the traction control is actually performed, and the opening of the throttle valve is controlled-toward the closure side such that the slip rate becomes equal to the predetermined value.

If the result in step S210 is negative, namely, if there is no request to start TRC, the control exits from the flowchart shown in Fig. 2, and a supercharging control by the motor 11b continues to be performed. On the other hand, if the result in step S210 is affirmative, a TRC performance flag F_{TRC} is set as 1 at this moment (step S215), so that the traction control is performed. It is to be noted herein that the traction control itself is performed according to another routine and is not included in the flowchart illustrated in Fig. 2. More specifically, a target wheel speed of the driving wheel is determined in accordance with a vehicle speed (based on a wheel speed of a driven wheel) at that moment. An opening of the throttle valve 13 is then determined on the basis of vehicle speed, the wheel speed of the driving wheel (and change amounts in vehicle speed and the wheel speed of the driving wheel), and the target wheel speed of the driving wheel.

After step S215, a traction control (TRC) continuation counter C_{TRC} is reset as 0 (step S220). The TRC continuation counter C_{TRC} is adapted to count how long the traction control has continued during the performance thereof. After step S220, the control temporarily exits from the flowchart of Fig. 2. The control starts again from step S200 after the lapse of a predetermined period.

On the other hand, if the traction control is already in operation, the result in step S205 is affirmative. In this case, the aforementioned TRC continuation counter C_{TRC} is incremented (step S225), and it is determined whether or not there is a request for acceleration (step S230). If there is a request for acceleration, namely, if the result in step S230 is affirmative, the TRC continuation counter C_{TRC} is simply incremented, and the control temporarily exits from this flowchart. The request for acceleration is generated, for example, on the basis of a depression stroke of the accelerator pedal 14 which is detected by the acceleration position sensor 15. The depression stroke of the accelerator indicates whether or not a driver of the vehicle has the intention of acceleration.

If there is a request for acceleration, there is a high possibility that the vehicle will shift to an accelerated state upon termination of the traction control, even in the case where the output from the engine 1 has decreased as a result of the performance of the traction control at that moment. In this case, the TRC continuation counter C_{TRC} is simply incremented, and the motor 11b continues to be driven. On the other hand, if there is no request for acceleration, it is then determined whether or not the TRC continuation counter C_{TRC} indicates a value larger than a predetermined value a, namely, whether or not the traction control has continued for a predetermined period or more (step S235).

If the result in step S235 is affirmative on the ground that the traction control has continued for the predetermined period or more, it can be determined that the traction control has not been instantaneously performed and that the possibility of re-acceleration is low. In this case, the motor 11b that has been continuously driven to suppress a turbo lag during re-acceleration is stopped (step S240). On the other hand, if the result in step S235 is negative, namely, if the traction control has not continued for the predetermined period or more yet, it is then determined whether or not a road surface on which the vehicle travels is low in friction coefficient (step S245).

In order to determine whether or not the road surface is low in friction coefficient, it is appropriate that a slip rate of the driving wheel or the like be calculated from an output from the wheel speed sensor 29 or the like and that the slip rate thus calculated be used. If it can be determined that the road surface is low in friction coefficient, it can be estimated that the traction control that is in operation is not an instantaneous one and that the traction control has been performed for a certain period. In such cases, even if the period of continuation of the traction control performed has not reached the predetermined value a, the motor 11b that has been continuously driven to suppress a turbo lag is stopped (step S240). Thus, the traction control (output reduction control) and the motor supercharging control for suppressing a turbo lag can be controlled in cooperation with each other.

It is to be noted herein that the invention is not limited to the aforementioned embodiment. In the embodiment mentioned above, for example, the operational state detection means, the output reduction determination means, and the output reduction means constitute the traction control system. However, these mechanisms are not limited to the traction control system. That is, these mechanisms are acceptable as long as they detect the operational state of the vehicle and reduce the output from the engine on the basis of the operational state detected. For instance, a vehicle behavior stabilization system based on the yaw control (a stability control system) or the like can be employed.

In the vehicle behavior stabilization system, as a rule, the degree of side slipping of a vehicle body is detected on the basis of the yaw rate of the vehicle body, the slipping angle of the vehicle body, and the like. If the degree of side slipping of the vehicle body is great, the output from the engine is first reduced and the kinetic energy of the vehicle body is reduced, whereby the behavior of the vehicle is stabilized. If the degree of side slipping is still great, the braking force applied to each wheel is controlled (i.e., a brake control is performed) in such a manner as to eliminate the side slipping of the vehicle body, with the engine speed having been reduced. According to an example of application to the vehicle behavior stabilization system of the invention, for example, the driving of the motor of the motorized turbocharger is continued at the moment when the vehicle behavior stabilization control based on the reduction in engine output is started, and the driving of the motor is stopped as soon as the brake control is started. If the brake control is started in this case, the motor is stopped on the ground that the degree of side slipping generated by the vehicle body is great and that it is forecast that the output reduction control of the engine will continue for the predetermined period or more.

It is also to be noted herein that the traction control system of the aforementioned embodiment is adapted to reduce the output from the engine 1 by controlling intake air amount by means of the electronically controlled throttle valve 13. However, the traction control system can also be realized by combining an intake air amount control with hydraulic brakes or an ignition timing control. The invention is applicable to the traction control system of this type as well. Further, the invention is also applicable to a traction control system that is based solely on hydraulic brakes.

Moreover, the traction control system of the aforementioned embodiment employs the throttle valve 13 so as to control intake air amount. It is also appropriate, however, that a subsidiary throttle be provided for the traction control and that the output from the engine 1 be controlled by controlling intake air amount by means of this subsidiary throttle.

The vehicular control apparatus of the invention includes the turbocharger (11) disposed in association with the internal combustion engine (1), the motor (11b) for causing the compressor (11a) of the turbocharger (11) to rotate, the operational state detection means (16, 29) for detecting an operational state of the vehicle, the output reduction determination means (16) for determining, on the basis of the operational state detected, whether or not the output from the internal combustion engine (1) is to be reduced, and the output reduction means (13, 16, 17) for reducing an output from the internal combustion engine (1). If the supercharging control performed by means of the motor (11b) is in operation when the output reduction control of the internal combustion engine (1) by the output reduction means (13, 16, 17) is started, the supercharging control by the motor (11b) is continued.

## Claims

1. A vehicular control apparatus for controlling a vehicle equipped with an internal combustion engine (1), including:
a turbocharger (11) disposed in association with the internal combustion engine (1);
a motor (11b) that causes a compressor (11a) of the turbocharger (11) so as to perform a supercharging control of the internal combustion engine (1);
operational state detection means (16, 29) for detecting an operational state of the vehicle;
output reduction determination means (16) for determining, on the basis of the operational state detected by the operational state detection means (16, 29), whether or not an output from the internal combustion engine (1) is to be reduced; and
output reduction means (13, 16, 17) for reducing the output from the internal combustion engine (1) when the output reduction determination means (16) determines that the output from the internal combustion engine (1) is to be reduced, wherein
if the supercharging control performed by means of the motor is in operation when the output reduction control of the internal combustion engine (1) by the output reduction means (13, 16, 17) is started, the supercharging control by the motor (11b) is continued,
**characterized in that**
if the output reduction control of the internal combustion engine (1) by the output reduction means (13, 16, 17) continues for a predetermined period (a) or more, the supercharging control performed by means of the motor (11b) is stopped.

2. The vehicular control apparatus according to claim 1, **characterized by** further comprising:
forecast means (16) for forecasting whether or not the output reduction control of the internal combustion engine (1) by the output reduction means (13, 16, 17) will continue for the predetermined period (α) or more, and **characterized in that**
if the forecast means (16) forecasts that the output reduction control will continue for the predetermined period (a) or more, supercharging performed by means of the motor (11b) is stopped even at the beginning of the output reduction control of the internal combustion engine (1).

3. A vehicular control apparatus for controlling a vehicle equipped with an internal combustion engine (1), including:
a turbocharger (11) disposed in association with the internal combustion engine (1);
a motor (11b) that causes a compressor (11a) of the turbocharger (11) so as to perform a supercharging control of the internal combustion engine (1);
operational state detection means (16, 29) for detecting an operational state of the vehicle;
output reduction determination means (16) for determining, on the basis of the operational state detected by the operational state detection means (16, 29), whether or not an output from the internal combustion engine (1) is to be reduced; and
output reduction means (13, 16, 17) for reducing the output from the internal combustion engine (1) when the output reduction determination means (16) determines that the output from the internal combustion engine (1) is to be reduced, wherein
if the supercharging control performed by means of the motor is in operation when the output reduction control of the internal combustion engine (1) by the output reduction means (13, 16, 17) is started, the supercharging control by the motor (11b) is continued,
**characterized by** further comprising:
forecast means (16) for forecasting whether or not the output reduction control of the internal combustion engine (1) by the output reduction means (13, 16, 17) will continue for the predetermined period (a) or more, and **characterized in that**
if the forecast means (16) forecasts that the output reduction control will continue for the predetermined period (α) or more, supercharging performed by means of the motor (11b) is stopped even at the beginning of the output reduction control of the internal combustion engine (1).

4. The vehicular control apparatus according to claim 2 or 3, **characterized in that**
the forecast means (16) determines whether or not a driving road surface is low in friction coefficient, and
if it is determined that the driving road surface is low in friction coefficient, the forecast means (16) forecasts that the output reduction control of the internal combustion engine (1) by the output reduction means (13, 16, 17) will continue for the predetermined period (a) or more.

5. The vehicular control apparatus according to one of claims 1 to 4, **characterized in that** the operational state is a slip rate.

6. A method of controlling a vehicular control apparatus for controlling a vehicle equipped with an internal combustion engine including a turbocharger (11) disposed in association with the internal combustion engine (1) and a motor (11b) that causes a compressor (11a) of the turbocharger (11) to rotate so as to perform a supercharging control of the internal combustion engine (1), including the steps of:
detecting an operational state of the vehicle;
determining, on the basis of the operational state detected, whether or not an output from the internal combustion engine (1) is to be reduced;
reducing the output from the internal combustion engine (1) when it is determined that the output from the internal combustion engine (1) is to be reduced, and
continuing the supercharging control by the motor (11b) if the supercharging control performed by means of the motor (11b) is in operation when the output reduction control of the internal combustion engine (1) is started,
**characterized by** further comprising the step of:
stopping the supercharging control performed by means of the motor (11b) if the output reduction control of the internal combustion engine (1) continues for the predetermined period (α) or more.

7. The method according to claim 6, **characterized by** further comprising the steps of:
forecasting whether or not the output reduction control of the internal combustion engine (1) will continue for a predetermined period or more; and
stopping the supercharging performed by means of the motor (11b) even at the beginning of the output reduction control of the internal combustion engine (1) if it is forecast that the output reduction control will continue for the predetermined period (α) or more.

8. A method of controlling a vehicular control apparatus for controlling a vehicle equipped with an internal combustion engine including a turbocharger (11) disposed in association with the internal combustion engine (1) and a motor (11b) that causes a compressor (11a) of the turbocharger (11) to rotate so as to perform a supercharging control of the internal combustion engine (1), including the steps of:
detecting an operational state of the vehicle;
determining, on the basis of the operational state detected, whether or not an output from the internal combustion engine (1) is to be reduced;
reducing the output from the internal combustion engine (1) when it is determined that the output from the internal combustion engine (1) is to be reduced; and
continuing the supercharging control by the motor (11b) if the supercharging control performed by means of the motor (11b) is in operation when the output reduction control of the internal combustion engine (1) is started,
**characterized by** further comprising the steps of:
forecasting whether or not the output reduction control of the internal combustion engine (1) will continue for a predetermined period or more; and
stopping the supercharging performed by means of the motor (11b) even at the beginning of the output reduction control of the internal combustion engine (1) if it is forecast that the output reduction control will continue for the predetermined period (α) or more.

9. The method according to claim 7 or 8, **characterized by** further comprising the steps of:
determining whether or not a driving road surface is low in friction coefficient; and
forecasting that the output reduction control of the internal combustion engine (1) will continue for the predetermined period (α) or more, if it is determined that the driving road surface is low in friction coefficient.

10. The method according to one of claims 6 to 9, **characterized in that** :
the operational state is a slip rate.

## Patentansprüche

1. Eine Vorrichtung zur Steuerung eines Fahrzeugs, um ein Fahrzeug zu steuern, das mit einer Brennkraftmaschine (1) ausgestattet ist, wobei es Folgendes aufweist:
einen Turbolader (11), der in Verbindung mit der Brennkraftmaschine (1) angeordnet ist;
einen Motor (11b), der einen Kompressor (11a) des Turboladers (11) dazu veranlasst, eine Steuerung zur Aufladung der Brennkraftmaschine (1) durchzuführen;
eine Einrichtung (16, 29) zur Erfassung eines Betriebszustands, um einen Betriebszustand des Fahrzeugs zu erfassen;
eine Einrichtung (16) zur Bestimmung der Verringerung der Leistungsabgabe, um auf der Grundlage des Betriebszustands, der durch die Einrichtung (16, 29) zur Erfassung des Betriebszustands erfasst wird, zu bestimmen, ob eine Leistungsabgabe von der Brennkraftmaschine (1) zu verringern ist oder nicht; und
eine Einrichtung (13, 16, 17) zur Verringerung der Leistungsabgabe, um die Leistungsabgabe von der Brennkraftmaschine (1) zu verringern, wenn die Einrichtung (16) zur Bestimmung der Verringerung der Leistungsabgabe bestimmt, dass die Leistungsabgabe von der Brennkraftmaschine (1) zu verringern ist, wobei
die Steuerung der Aufladung durch den Motor (11b) fortgesetzt wird, wenn die Steuerung zur Verringerung der Leistungsabgabe von der Brennkraftmaschine (1)
durch die Einrichtung (13, 16, 17) zur Verringerung der Leistungsabgabe gestartet wird, während die Steuerung der Aufladung, die mittels des Motors durchgeführt wird, in Betrieb ist,
**dadurch gekennzeichnet, dass**
die Steuerung der Aufladung gestoppt wird, die mittels des Motors (11b) durchgeführt wird, wenn die Steuerung zur Verringerung der Leistungsabgabe von der Brennkraftmaschine (1) durch die Einrichtung (13, 16, 17) für einen vorab bestimmten Zeitabschnitt (a) oder länger andauert.

2. Die Vorrichtung zur Steuerung eines Fahrzeugs nach Anspruch 1, **dadurch gekennzeichnet, dass** sie weiterhin Folgendes aufweist:
eine Einrichtung (16) zur Vorhersage, um vorherzusagen, ob die Steuerung zur Verringerung der Leistungsabgabe von der Brennkraftmaschine (1) durch die Einrichtung (13, 16, 17) für den vorab bestimmten Zeitabschnitt (a) oder länger andauern wird oder nicht, und **dadurch gekennzeichnet, dass**
die Aufladung, die mittels des Motors (11b) durchgeführt wird, bereits zu Beginn der Steuerung zur Verringerung der Leistungsabgabe von der Brennkraftmaschine (1) gestoppt wird, wenn die Einrichtung (16) zur Vorhersage vorhersagt, dass die Steuerung zur Verringerung der Leistungsabgabe für den vorab bestimmten Zeitabschnitt (a) oder länger andauern wird.

3. Eine Vorrichtung zur Steuerung eines Fahrzeugs, um ein Fahrzeug zu steuern, das mit einer Brennkraftmaschine (1) ausgestattet ist, wobei es Folgendes aufweist:
einen Turbolader (11), der in Verbindung mit der Brennkraftmaschine (1) angeordnet ist;
einen Motor (11b), der einen Kompressor (11a) des Turboladers (11) dazu veranlasst, eine Steuerung zur Aufladung der Brennkraftmaschine (1) durchzuführen;
eine Einrichtung (16, 29) zur Erfassung eines Betriebszustands, um einen Betriebszustand des Fahrzeugs zu erfassen;
eine Einrichtung (16) zur Bestimmung der Verringerung der Leistungsabgabe, um auf der Grundlage des Betriebszustands, der durch die Einrichtung (16, 29) zur Erfassung des Betriebszustands erfasst wird, zu bestimmen, ob eine Leistungsabgabe von der Brennkraftmaschine (1) zu verringern ist oder nicht; und
eine Einrichtung (13, 16, 17) zur Verringerung der Leistungsabgabe, um die Leistungsabgabe von der Brennkraftmaschine (1) zu verringern, wenn die Einrichtung (16) zur Bestimmung der Verringerung der Leistungsabgabe bestimmt, dass die Leistungsabgabe von der Brennkraftmaschine (1) zu verringern ist, wobei
die Steuerung der Aufladung durch den Motor (11b) fortgesetzt wird, wenn die Steuerung zur Verringerung der Leistungsabgabe von der Brennkraftmaschine (1) durch die Einrichtung (13, 16, 17) zur Verringerung der Leistungsabgabe gestartet wird, während die Steuerung zur Aufladung, die mittels des Motors durchgeführt wird, in Betrieb ist,
**dadurch gekennzeichnet, dass** sie weiterhin Folgendes aufweist:
eine Einrichtung zur Vorhersage (16), um vorherzusagen, ob die Steuerung zur Verringerung der Leistungsabgabe von der Brennkraftmaschine (1) durch die Einrichtung (13, 16, 17) zu Verringerung der Leistungsabgabe für den vorab bestimmten Zeitabschnitt (a) oder länger andauern wird oder nicht, und **dadurch gekennzeichnet, dass**
wenn die Einrichtung (16) zur Vorhersage vorhersagt, dass die Steuerung zur Verringerung der Leistungsabgabe für den vorab bestimmten Zeitabschnitt (a) oder länger andauern wird, die Aufladung, die mittels des Motors (11b) durchgeführt wird, schon zu Beginn der Steuerung zur Verringerung der Leistungsabgabe von der Brennkraftmaschine (1) gestoppt wird.

4. Die Vorrichtung zur Steuerung eines Fahrzeugs nach Anspruch 2 oder 3, **dadurch gekennzeichnet, dass** die Einrichtung (16) zur Vorhersage bestimmt, ob eine Oberfläche einer befahrenen Straße einen niedrigen Reibungskoeffizienten aufweist, und **dadurch**, dass
die Einrichtung (16) zur Vorhersage vorhersagt, dass die Steuerung zur Verringerung der Leistungsabgabe von der Brennkraftmaschine (1) durch die Einrichtung (13, 16, 17) zur Verringerung der Leistungsabgabe für den vorab bestimmten Zeitabschnitt (a) oder länger andauern wird, wenn es bestimmt wird, dass die Oberfläche der befahrenen Straße einen niedrigen Reibungskoeffizienten aufweist.

5. Die Vorrichtung zur Steuerung eines Fahrzeugs nach einem der Ansprüche 1 bis 4, **dadurch gekennzeichnet, dass** der Betriebszustand eine Schlupfrate ist.

6. Ein Verfahren zum Steuern einer Vorrichtung zur Steuerung eines Fahrzeugs, um ein Fahrzeug zu steuern, das mit einer Brennkraftmaschine ausgestattet ist, die einen Turbolader (11) aufweist, der in Verbindung mit der Brennkraftmaschine (1) angeordnet ist, und einen Motor (11b), der veranlasst, dass sich ein Kompressor (11a) des Turboladers (11) dreht, um eine Steuerung zur Aufladung der Brennkraftmaschine (1) durchzuführen, wobei das Verfahren die folgenden Schritte aufweist:
Erfassen eines Betriebszustands des Fahrzeugs;
auf der Grundlage des erfassten Betriebszustands bestimmen, ob eine Leistungsabgabe von der Brennkraftmaschine (1) zu verringern ist;
die Leistungsabgabe von der Brennkraftmaschine (1) verringern, wenn es bestimmt wird, dass die Leistungsabgabe von der Brennkraftmaschine (1) zu verringern ist; und
die Steuerung zur Aufladung durch den Motor (11b) fortführen, wenn die Steuerung zur Aufladung, die mittels des Motors (11b) durchgeführt wird, in Betrieb ist, wenn die Steuerung zur Verringerung der Leistungsabgabe von der Brennkraftmaschine (1) gestartet ist,
**dadurch gekennzeichnet, dass** das Verfahren weiterhin folgenden Schritt aufweist:
die Steuerung zur Aufladung, die mittels des Motors (11b) durchgeführt wird, anhalten, wenn die Steuerung zur Verringerung der Leistungsabgabe von der Brennkraftmaschine (1) für den vorab bestimmten Zeitabschnitt (a) oder länger andauert.

7. Das Verfahren nach Anspruch 6, **dadurch gekennzeichnet, dass** es weiterhin folgende Schritte aufweist:
Vorhersagen, ob die Steuerung zur Verringerung der Leistungsabgabe von der Brennkraftmaschine (1) für einen vorab bestimmten Zeitabschnitt oder länger andauern wird; und
die Aufladung, die mittels des Motors (11b) durchgeführt wird, selbst zu Beginn der Steuerung zur Verringerung der Leistungsabgabe von der Brennkraftmaschine (1) anhalten, wenn es vorhergesagt wird, dass die Steuerung zur Verringerung der Leistungsabgabe für den vorab bestimmten Zeitabschnitt (a) oder länger andauern wird.

8. Ein Verfahren zum Steuern einer Vorrichtung zur Steuerung eines Fahrzeugs, um ein Fahrzeug zu steuern, das mit einer Brennkraftmaschine ausgestattet ist, die einen Turbolader (11) aufweist, der in Verbindung mit der Brennkraftmaschine (1) angeordnet ist, und einen Motor (11b), der einen Kompressor (11a) des Turboladers (11) dazu veranlasst, sich zu drehen, um eine Steuerung zur Aufladung der Brennkraftmaschine (1) durchzuführen, wobei das Verfahren die folgenden Schritte aufweist:
Erfassen eines Betriebszustands des Fahrzeugs;
auf der Grundlage des erfassten Betriebszustands bestimmen, ob eine Leistungsabgabe von der Brennkraftmaschine (1) zu verringern ist oder nicht;
die Leistungsabgabe von der Brennkraftmaschine (1) verringern, wenn es bestimmt wird, dass die Leistungsabgabe von der Brennkraftmaschine (1) zu verringern ist; und
die Steuerung zur Aufladung durch den Motor (11b) fortsetzen, wenn die Steuerung zur Aufladung, die mittels des Motors (11b) durchgeführt wird, in Betrieb ist, während die Steuerung zur Verringerung der Leistungsabgabe von der Brennkraftmaschine (1) gestartet ist,
**dadurch gekennzeichnet, dass** das Verfahren weiterhin folgende Schritte aufweist:
Vorhersagen, ob die Steuerung zur Verringerung der Leistungsabgabe von der Brennkraftmaschine (1) für einen vorab bestimmten zeitabschnitt oder länger andauern wird; und
die Aufladung, die mittels des Motors (11b) durchgeführt wird, bereits zu Beginn der Steuerung zur Verringerung der Leistungsabgabe von der Brennkraftmaschine (1) beenden, wenn es vorhergesagt wird, dass die Steuerung zur Verringerung der Leistungsabgabe für den vorab bestimmten Zeitabschnitt (a) oder länger andauern wird.

9. Das Verfahren nach Anspruch 7 oder 8, **dadurch gekennzeichnet, dass** es weiterhin folgende Schritte aufweist:
Bestimmen, ob eine Oberfläche einer befahrenen Straße einen niedrigen Reibungskoeffizienten aufweist oder nicht; und
Vorhersagen, dass die Steuerung zur Verringerung der Leistungsabgabe von der Brennkraftmaschine (1) für den vorab bestimmten Zeitabschnitt (a) oder länger andauern wird, wenn es bestimmt wird, dass die Oberfläche der befahrenen Straße einen niedrigen Reibungskoeffizienten aufweist.

10. Das Verfahren nach einem der Ansprüche 6 bis 9, **dadurch gekennzeichnet, dass**:
der Betriebszustand eine Schlupfrate ist.

## Revendications

1. Appareil de commande de véhicule destiné à commander un véhicule équipé d'un moteur à combustion interne (1), comprenant :
un turbocompresseur (11) disposé en association avec le moteur à combustion interne (1) ;
un moteur (11b) qui fait exécuter par un compresseur (11a) du turbocompresseur (11) une commande de suralimentation du moteur à combustion interne (1) ;
un moyen (16, 29) de détection d'état de fonctionnement destiné à détecter un état de fonctionnement du véhicule ;
un moyen (16) de détermination de réduction de la puissance de sortie destiné à déterminer, en se basant sur l'état de fonctionnement détecté par le moyen (16, 29) de détection d'état de fonctionnement, si la puissance délivrée par le moteur à combustion interne (1) doit ou non être réduite ; et
un moyen (13, 16, 17) de réduction de la puissance de sortie destiné à réduire la puissance délivrée par le moteur à combustion interne (1) si le moyen (16) de détermination de réduction de la puissance de sortie détermine que la puissance délivrée par le moteur à combustion interne (1) doit être réduite, dans lequel
si la commande de suralimentation exécutée au moyen du moteur est en fonctionnement quand la commande de réduction de la puissance de sortie du moteur à combustion interne (1) par le moyen (13, 16, 17) de réduction de la puissance de sortie est lancée, la commande de suralimentation par le moteur (11b) est poursuivie,
**caractérisé en ce que**
si la commande de réduction de la puissance de sortie du moteur à combustion interne (1) par le moyen (13, 16, 17) de réduction de la puissance de sortie se poursuit pendant une période prédéterminée (α) ou plus, la commande de suralimentation exécutée au moyen du moteur (11b) est arrêtée.

2. Appareil de commande de véhicule selon la revendication 1, **caractérisé en ce qu'**il comprend en outre:
un moyen (16) de prévision destiné à prévoir si la commande de réduction de la puissance de sortie du moteur à combustion interne (1) par le moyen (13, 16, 17) de réduction de la puissance de sortie va ou non se poursuivre pendant la période prédéterminée (α) ou plus, et
**caractérisé en ce que**
si le moyen (16) de prévision prévoit que la commande de réduction de la puissance de sortie va se poursuivre pendant la période prédéterminée (α) ou plus, la suralimentation exécutée au moyen du moteur (11b) est arrêtée même au début de la commande de réduction de la puissance de sortie du moteur à combustion interne (1).

3. Appareil de commande de véhicule destiné à commander un véhicule équipé d'un moteur à combustion interne (1), comprenant :
un turbocompresseur (11) disposé en association avec le moteur à combustion interne (1) ;
un moteur (11b) qui fait exécuter par un compresseur (11a) du turbocompresseur (11) une commande de suralimentation du moteur à combustion interne (1) ;
un moyen (16, 29) de détection d'état de fonctionnement destiné à détecter un état de fonctionnement du véhicule ;
un moyen (16) de détermination de réduction de la puissance de sortie destiné à déterminer, en se basant sur l'état de fonctionnement détecté par le moyen (16, 29) de détection d'état de fonctionnement, s'il est ou non nécessaire de réduire une puissance délivrée par le moteur à combustion interne (1) ; et
un moyen (13, 16, 17) de réduction de la puissance de sortie destiné à réduire la puissance délivrée par le moteur à combustion interne (1) si le moyen (16) de détermination de réduction de la puissance de sortie détermine qu'il est nécessaire de réduire la puissance délivrée par le moteur à combustion interne (1), dans lequel
si la commande de suralimentation exécutée au moyen du moteur est en fonctionnement quand la commande de réduction de la puissance de sortie du moteur à combustion interne (1) par le moyen (13, 16, 17) de réduction de la puissance de sortie est lancée; la commande de suralimentation par le moteur (11b) est poursuivie,
**caractérisé en ce qu'**il comprend en outre
un moyen (16) de prévision destiné à prévoir si la commande de réduction de la puissance de sortie du moteur à combustion interne (1) par le moyen (13, 16, 17) de réduction de la puissance de sortie va ou non se poursuivre pendant la période prédéterminée (α) ou plus, et
**caractérisé en ce que**
si le moyen (16) de prévision prévoit que la commande de réduction de la puissance de sortie va se poursuivre pendant la période prédéterminée (α) ou plus, la suralimentation exécutée au moyen du moteur (11b) est arrêtée même au début de la commande de réduction de la puissance de sortie du moteur à combustion interne (1).

4. Appareil de commande de véhicule selon la revendication 2 ou 3, **caractérisé en ce que**
le moyen (16) de prévision détermine si une surface de route parcourue est ou non à faible coefficient de frottement, et
s'il est déterminé que si la surface de route parcourue est à faible coefficient de frottement, le moyen (16) de prévision prévoit que la commande de réduction de la puissance de sortie du moteur à combustion interne (1) par le moyen (13, 16, 17) de réduction de la puissance de sortie va se poursuivre pendant la période prédéterminée (α) ou plus.

5. Appareil de commande de véhicule selon l'une des revendications 1 à 4, **caractérisé en ce que** l'état de fonctionnement est une vitesse de glissement.

6. Procédé de commande d'un appareil de commande de véhicule destiné à commander un véhicule équipé d'un moteur à combustion interne comprenant un turbocompresseur (11) disposé en association avec le moteur à combustion interne (1) et un moteur (11b) qui fait tourner un compresseur (11a) du turbocompresseur (11) de manière à exécuter une commande de suralimentation du moteur à combustion interne (1), comprenant les étapes consistant à :
détecter un état de fonctionnement du véhicule ;
déterminer, en se basant sur l'état de fonctionnement détecté, si une puissance délivrée par le moteur à combustion interne (1) doit ou non être réduite ;
réduire la puissance délivrée par le moteur à combustion interne (1) s'il est déterminé que la puissance délivrée par le moteur à combustion interne (1) doit être réduite ; et
poursuivre la commande de suralimentation exécutée par le moteur (11b) si la commande de suralimentation exécutée au moyen du moteur (11b) est en fonctionnement quand la commande de réduction de la puissance de sortie du moteur à combustion interne (1) par le moyen (13, 16, 17) de réduction de la puissance de sortie est lancée,
**caractérisé en ce qu'**il comprend en outre l'étape consistant à :
arrêter la commande de suralimentation exécutée au moyen du moteur (11b) si la commande de réduction de la puissance de sortie du moteur à combustion interne (1) se poursuit pendant la période prédéterminée (α) ou plus.

7. Procédé selon la revendication 6, comprenant en outre les étapes consistant à :
prévoir si la commande de réduction de la puissance de sortie du moteur à combustion interne (1) va ou non se poursuivre pendant une période prédéterminée ou plus ; et
arrêter la suralimentation exécutée au moyen du moteur (11b) même au début de la commande de réduction de la puissance de sortie du moteur à combustion interne (1) s'il est prévu que la commande de réduction de la puissance de sortie va se poursuivre pendant la période prédéterminée (α) ou plus.

8. Procédé de commande d'un appareil de commande de véhicule destiné à commander un véhicule équipé d'un moteur à combustion interne comprenant un turbocompresseur (11) disposé en association avec le moteur à combustion interne (1) et un moteur (11b) qui fait tourner un compresseur (11a) du turbocompresseur (11) de manière à exécuter une commande de suralimentation du moteur à combustion interne (1), comprenant les étapes consistant à :
détecter un état de fonctionnement du véhicule ;
déterminer, en se basant sur l'état de fonctionnement détecté, si la puissance délivrée par le moteur à combustion interne (1) doit ou non être réduite ;
réduire la puissance délivrée par le moteur à combustion interne (1) s'il est déterminé que la puissance délivrée par le moteur à combustion interne (1) doit ou non être réduite ; et
poursuivre la commande de suralimentation exécutée par le moteur (11b) si la commande de suralimentation exécutée au moyen du moteur (11b) est en fonctionnement quand la commande de réduction de la puissance de sortie du moteur à combustion interne (1) par le moyen (13, 16, 17) de réduction de la puissance de sortie est lancée,
**caractérisé en ce qu'**il comprend en outre les étapes consistant à :
prévoir si la commande de réduction de la puissance de sortie du moteur à combustion interne va ou non se poursuivre pendant une période prédéterminée ou plus ; et
arrêter la suralimentation exécutée au moyen du moteur (11b) même au début de la commande de réduction de la puissance de sortie du moteur à combustion interne (1) s'il est prévu que la commande de réduction de la puissance de sortie va se poursuivre pendant la période prédéterminée (α) ou plus.

9. Procédé selon la revendication 7 ou 8, **caractérisé en ce qu'**il comprend en outre les étapes consistant à :
déterminer si une surface de route parcourue est ou non à faible coefficient de frottement ; et
prévoir que la commande de réduction de la puissance de sortie va se poursuivre pendant la période prédéterminée (α) ou plus s'il est déterminé que la surface de route parcourue est à faible coefficient de frottement.

10. Procédé selon l'une des revendications 6 à 9, **caractérisé en ce que** :
l'état de fonctionnement est une vitesse de glissement.
